# EUROPÄISCHE PATENTANMELDUNG

(11) **EP 0 583 580 A2**
(43) Veröffentlichungstag der Anmeldung: **23.02.1994**
(21) Anmeldenummer: 93110230.5
(22) Anmeldetag: 26.06.1993
(51) Int. Cl.: F16C 11/04, B60T 7/06

(54) **Gabelgelenk**

(30) Priorität: 18.08.1992 DE 4227291
(71) Anmelder: WABCO STANDARD GmbH, D-53008 Bonn (DE)
(72) Erfinder: Guest, Philip John, Hollywood, Birmingham B14 4PR (GB); Meyer, Harald, D-3008 Garbsen 5 (DE); Wiehen, Christian, Dr., D-3006 Burgwedel (DE)
(74) Vertreter: Schrödter, Manfred, Dipl.-Ing.

(57) **Zusammenfassung**

Ein Gabelgelenk besteht aus einer Gabel (1), einem Kopf (2) und einem die Gabel (1) mit dem Kopf (2) verbindenden achsenartigen Teil (5).

Um die Gabel (1) und den Kopf (2) leichter miteinander verbinden zu können, sind an den Schenkeln (7, 14) der Gabel (1) Federelemente (4, 16) vorgesehen, die Ausnehmungen (6, 15) zur Aufnahme eines am Kopf (2) fest angeordneten achsenartigen Teiles (5) aufweisen. Zusätzlich sind an den Schenkeln (7, 14) der Gabel (1) in Längsrichtung der Gabel (1) verlaufende, als Zwangsführung für den Kopf (2) bzw. das achsenartige Teil (5) dienende, von Führungsflächen begrenzte Ausnehmungen (3, 17) vorgesehen.

Bei der Montage wird der Kopf (2) mit dem achsenartigen Teil (5) in die Gabel (1) eingeschoben, so weit, bis das achsenartige Teil (5) in die in den Federelementen (4, 16) angeordneten Ausnehmungen (6, 15) einschnappt. Das achsenartige Teil (5) wird beim Herstellen der Verbindung von Gabel (1) und Kopf (2) in den als Zwangsführung dienenden Ausnehmungen (3, 17) der Gabel (1) geführt.

## Beschreibung

Die Erfindung betrifft ein Gabelgelenk gemäß dem Oberbegriff des Patentanspruchs 1.

Ein derartiges Gabelgelenk ist aus dem "Taschenbuch für den Maschinenbau" (Herausgeber Prof. H. Dubbel, Band I von 1949, S. 522, Fig. 73) bekannt. Es besteht aus Gabel, Kopf und Lagerbolzen.

Bei Einrichtungen, bei denen zwei Bauteile über ein Gabelgelenk gelenkig miteinander zu verbinden sind, ist die Herstellung der Verbindung der Gabel des einen Bauteils mit dem Kopf des anderen Bauteils oft nur unter schwierigen Montagebedingungen möglich.

Gründe für diese Schwierigkeiten können ein schwer zugänglicher Einbauraum sein, in dem die Gelenkstelle gelegen ist, oder auch ein sehr enger Einbauraum, der ein Einführen des die Gabel mit dem Kopf verbindenden Lagerbolzens in die Aufnahmebohrungen von Gabel und Kopf nahezu unmöglich macht.

Bei schwer einzusehenden Einbauräumen ist das zur Deckung bringen der Aufnahmebohrungen zwecks Einführens des Lagerbolzens zudem sehr schwierig.

Der Erfindung liegt deshalb die Aufgabe zugrunde, ein Gabelgelenk der eingangs erwähnten Art zu schaffen, welches einfach im Aufbau ist und dessen Gelenkteile sich auf einfache Art und Weise miteinander verbinden lassen.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, auch dann den Kopf sicher in die Gabel einführen und eine Verbindung zwischen Gabel und Kopf herstellen zu können, wenn die Verbindungsstelle zwischen Gabel und Kopf nicht oder nur sehr schwer eingesehen werden kann.

Die beiden als Halterung für den Kopf dienenden Federn sind vorteilhafterweise als ein einstückiges U-förmiges Bauteil ausgebildet, welches nach Art einer Klammer auf die Gabel aufgeschoben wird, derart, daß die freien Enden der Federn in Richtung auf die freien Enden der Schenkel der Gabel zu verlaufen.

Vorzugsweise sind die als Zwangsführung für ein die Gabel mit dem Kopf verbindendes achsenartiges Teil und somit für den Kopf des Gabelgelenks dienenden Ausnehmungen in den Schenkeln der Gabel im wesentlichen keilförmig ausgebildet, wobei die in den Schenkeln auslaufenden Endbereiche der Ausnehmungen halbkreisförmig ausgebildet sind. Die halbkreisförmigen Endbereiche dieser Ausnehmungen haben vorzugsweise den gleichen Radius wie das am Kopf befestigte achsenartige Teil.

Anstelle in den Federn Ausnehmungen (Bohrungen) zur Aufnahme der Endbereiche des achsenartigen Teils vorzusehen, können die Federn in vorteilhafter Weise an ihren freien Enden nach Art einer Klinke ausgebildet sein, wobei die als Klinken dienenden Vorsprünge das achsenartige Teil übergreifen, so daß die den halbkreisförmigen Endbereich jeder als Zwangsführung dienenden Ausnehmung begrenzende Wand zusammen mit dem klinkenartigen Vorsprung jeder Feder eine Lagerstelle für das achsenartige Teil bildet.

Anhand der Zeichnung werden nachstehend drei Ausführungsbeispiele der Erfindung näher erläutert.

Es zeigen:
- Figur 1: ein Gabelgelenk mit Gabel, Kopf und einem achsenartigen Teil zur Verbindung von Gabel und Kopf, wobei die Gabel eine Führung für das achsenartige Teil aufweist und auf die Gabel ein U-förmiges Federelement mit Ausnehmungen zur Halterung des achsenartigen Teils aufgeschoben ist,
- Figur 2: die Gabel des in Figur 1 gezeigten Gabelgelenks mit Federelement, jedoch um 90° um ihre Längsachse gedreht dargestellt,
- Figur 3: eine Gabel eines Gabelgelenks mit einem Federelement, das einen klinkenartigen Bereich aufweist, welcher das am Kopf des Gabelgelenks angeordnete achsenartige Teil übergreift.
- Figur 4: ein Gabelgelenk mit einer Gabel und einem Kopf, wobei auf die Gabel ein U-förmiges Federelement aufgeschoben ist, welches zwei durch Ausnehmungen in den Schenkeln der Gabel hindurchgeführte achsenartige Vorsprünge aufweist, die in eine Ausnehmung des Kopfes eingreifen und
- Figur 5: ein Gabelgelenk mit einer Gabel und einem Kopf, wobei der Kopf zu seiner Verbindung mit der Gabel zwei koaxial zueinander angeordnete Achsteile aufweist, die gegen eine Federkraft aufeinander zu bewegbar sind.

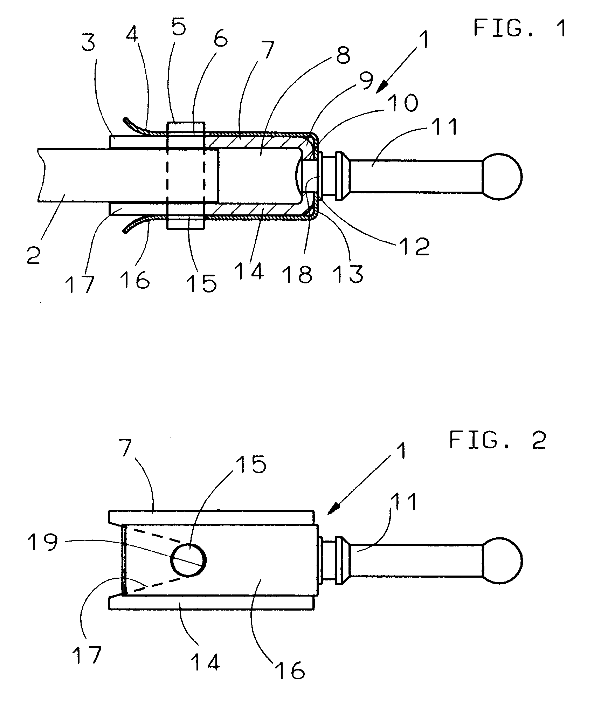

In Figur 1 ist ein als Gabel (1) ausgebildetes erstes Bauteil dargestellt, welches einen ersten Schenkel (7) und einen zweiten Schenkel (14) aufweist. Mittels eines Verbindungsteiles (9) sind die beiden Schenkel (7) und (14) an ihrem freien Ende miteinander verbunden. Die beiden Schenkel (7) und (14) verlaufen im wesentlichen parallel zueinander und sind mit Abstand so zueinander angeordnet, daß ihre einander zugewandten Seiten die seitliche Begrenzung für einen Schlitz (8) zur Aufnahme eines als Kopf für ein Gabelgelenk ausgebildeten zweiten Bauteiles (2) bilden.

In diesem Ausführungsbeispiel sind die beiden Schenkel (7) und (14) und das Verbindungsteil (9) als eine einstückige U-förmige Baueinheit (1) ausgebildet.

Sowohl im ersten Schenkel (7) als auch im zweiten Schenkel (14) der Gabel (1) ist je eine vom freien Ende des jeweiligen Schenkels (7) bzw. (14) ausgehende, sich in den Schenkel (7) bzw. (14) hineinerstreckende Ausnehmung (3) bzw. (17) vorgesehen, die in Richtung der Längsachse der Schenkel (7) und (14) verläuft. Der im Schenkel (7) bzw. (14) auslaufende Endbereich jeder der beiden Ausnehmungen (3) bzw. (17) ist halbkreisförmig ausgebildet. Die die halbkreisförmig ausgebildeten Endbereiche der Ausnehmungen (3) und (17) begrenzenden Wandungen dienen als Auflager für ein achsenartiges Teil (5), welches am zweiten Bauteil (2) befestigt ist bzw. mit diesem eine Baueinheit bildet.

Das achsenartige Teil (5) ist quer zur Längsachse der Gabel (1) am zweiten Bauteil (2) angeordnet und steht mit der Gabel (1) derart in Wirkverbindung, daß das sich in den Schlitz (8) der Gabel (1) hineinerstreckende zweite Bauteil (2) und die Gabel (1) um die Längsachse des achsenartigen Teiles (5) relativ zueinander verschwenkbar sind.
Es versteht sich von selbst, daß die Ausnehmungen (3) und (17) in den Schenkeln (7) und (14) gleichachsig zum achsenartigen Teil (5) angeordnet sind. Der Radius des Endbereiches jeder der beiden Ausnehmungen (3) bzw. (17) entspricht annähernd dem Radius des achsenartigen Teiles (5).

Auf die U-förmig ausgebildete Gabel (1) ist ein ebenfalls U-förmiges Federelement (4, 16, 13) aufgeschoben, derart, daß die der Stirnseite des Verbindungsteiles (9) für die Schenkel (7, 14) der Gabel (1) zugewandte Seite des U-förmigen Federelementes (4, 16, 13) an dieser Stirnseite anliegt und wenigstens ein Teilbereich der beiden Seitenteile (4) und (16) des U-förmigen Federelementes (4, 16, 13) unter Vorspannung an den einander abgewandten Seiten der Schenkel (3) bzw. (17) der Gabel (1) anliegen (Seitenteil 4 des Federelementes 4, 16, 13 liegt an der Außenseite des Schenkels (7) und Seitenteil (16) des Federelementes (4, 16, 13) liegt an der Außenseite des Schenkels 14 der Gabel 1 an).

Jedes der beiden Seitenteile (4) bzw. (16) des Federelementes (4, 16, 13) weist eine in Richtung der Längsachse des achsenartigen Teiles (5) verlaufende Ausnehmung (6 und 15), wie z. B. eine Durchgangsbohrung, auf, wobei die Ausnehmungen (6) und (15) so zueinander angeordnet sind, daß sie miteinander fluchten. Das achsenartige Teil (5) ist in seiner axialen Erstreckung so bemessen, daß diese größer ist als der Abstand zwischen den beiden Seitenteilen (4) und (16) des Federelementes (4, 16, 13).

Das achsenartige Teil (5) ist mit seinen freien Endbereichen in den Ausnehmungen (6) und (15) der Seitenteile (4) und (16) des Federelementes (4, 16, 13) gelagert.

An ihrem freien Endbereich sind die Seitenteile (4 und 16) des Federelementes (4, 16, 13) leicht nach außen gebogen ausgebildet.

Das die beiden Schenkel (7) und (14) der Gabel (1) verbindende Verbindungsteil (9) weist eine in Richtung der Längsachse der Gabel (1) verlaufende Bohrung (10) auf, die mit einer Bohrungs (12) fluchtet, welche in dem am Verbindungsteil (9) anliegenden Teil (13) des Federelementes (4, 16, 13) vorgesehen ist.
In die Bohrungen (10) und (12) ist eine Stange (11) mit ihrem einen Endbereich eingeführt und mit der Gabel (1) verbunden, wodurch das Federelement (4, 16, 13) zwischen dem Verbindungsteil (9) der beiden Schenkel (7) und (14) der Gabel (1) und einem Vorsprung (18) der Stange (11) fixiert ist.

In Figur 2 ist die Gabel um 90° um ihre Längsachse gedreht dargestellt.

Der besseren Übersicht halber sind die den in Figur 1 gezeigten Bauteilen gleichen Bauteile mit gleichen Bezugszeichen versehen.

Figur 2 zeigt die Draufsicht auf den Schenkel (14) der Gabel (1) sowie das Seitenteil (16) des Federelementes (4, 16, 13), welches am Schenkel (14) der Gabel anliegt.

Deutlich erkennbar weist die im Schenkel (14) vorgesehene Ausnehmung (17) eine Keilform auf, wobei die Ausnehmung (17) sich von dem freien Endbereich des Schenkels (14) ausgehend in den Schenkel hinein verjüngt. Der im Schenkel (14) gelegene Endbereich (19) der Ausnehmung (17) ist halbkreisförmig ausgebildet und weist einen Radius auf, der dem Radius des in Figur 1 gezeigten achsenartigen Teiles (5) entspricht. Die Ausnehmung (3) im anderen Schenkel (7) entspricht der Ausnehmung (17) im Schenkel (14) der Gabel (1).

Das Seitenteil (16) des Federelementes (4, 16, 13) ist so bemessen, daß es den überwiegenden Teil des Schenkels (14) der Gabel (1) abdeckt. Selbstverständlich ist auch das andere Seitenteil (4) des Federelementes (4, 16, 13) so bemessen, daß es ebenfalls den überwiegenden Teil des Schenkels (7) der Gabel (1) überdeckt.

Der Durchmesser der zur Lagerung des achsenartigen Teiles (5) dienenden Bohrung (15) in dem Seitenteil (16) bz. (4) des Federelementes (16, 4, 13) ist so bemessen, daß er annähernd dem Durchmesser des achsenartigen Teiles (5) entspricht.
Ein Teil der die Bohrung (15) begrenzenden Wandung des Seitenteiles (16) des Federelementes (16, 4, 13) schließt bündig mit der die Ausnehmung (17) im Schenkel (14) begrenzenden Wand (19) des Schenkels (14) ab.

Das Gleiche trifft selbstverständlich auch für die in Figur 1 gezeigte Bohrung im Seitenteil (4) des Federelementes (4, 16, 13) zu.

Wie in Figur 1 bereits erkennbar, ist das Federelement (4, 16, 13) mittels der Stange (11) an der Gabel (1) fixiert.

Die Gabel (1) ist im vorliegenden Ausführungsbeispiel als ein U-förmiges einstückiges Bauteil ausgebildet. Es ist aber auch möglich, die beiden Schenkel (7) und (14) der Gabel mittels eines Verbindungsteiles miteinander lösbar zu verbinden.

Ebenso ist es möglich, anstelle eines U-förmig ausgebildeten Federelementes zwei einzelne Blattfedern vorzusehen, wobei jede dieser Blattfedern mit ihrem dem freien Endbereich des zugeordneten Schenkels der Gabel abgewandten Endbereich an dem zugeordneten Schenkel lösbar oder nicht lösbar befestigt ist.
Das U-förmig ausgebildete Federelement (4, 16, 13) besteht praktisch aus einer in diese Form gebrachten Blattfeder.

Nachfolgend wird die Montage des im vorstehenden beschriebenen Gabelgelenks näher erläutert.

Es wird angenommen, daß mittels dieses Gabelgelenks ein Bremsventil mit einer zu diesem gehörigen Trittplatte verbunden werden soll.
Die Gabel (1) ist über die Stange (11) mit dem Bremsventil verbunden, welches unter der Bodenplatte des Führerhauses eines Kraftfahrzeugs befestigt ist. Das als Stößel ausgebildete zweite Bauteil (2) steht mit einer Trittplatte in Verbindung, die auf der Bodenplatte des Führerhauses des Kraftfahrzeugs verschwenkbar angeordnet ist.

Bei der Montage wird das zweite Bauteil (2) durch eine Öffnung in der Bodenplatte des Führerhauses in Richtung auf die Gabel (1) zu geschoben.

Dabei gelangt der Endbereich des Bauteiles (2) in den Schlitz (8) der Gabel (1). Gleichzeitig gelangt das mit dem Bauteil (2) verbundene achsenartige Teil (5) in die in Richtung der Längsachse der Gabel (1) verlaufenden in den Schenkeln (7) und (14) der Gabel angeordneten Ausnehmungen (3) und (17).

Dabei werden die Seitenteile (4) und (16) des Federelementes (4, 16, 13) von den freien Enden des achsenartigen Teiles (5) nach außen, von den Schenkeln (7) und (14) der Gabel (1) weg gedrückt.
Das Bauteil (2) mit dem achsenartigen Teil (5) wird so weit in den Schlitz (8) der Gabel (1) und so weit in die als Führung für den Kopf (in diesem Fall Führung für das achsenartige Teil (5) und somit das zweite Bauteil (2)) dienenden Ausnehmungen (3) und (17) der Schenkel (7) und (14) der Gabel (1) eingeschoben, bis die freien Endbereiche des achsenartigen Teiles (5) in die als Bohrungen ausgebildeten Ausnehmungen (6) und (15) der Seitenteile (4) und (16) des Federelementes (4, 16, 13) gelangen. Das achsenartige Teil (5) kommt dabei mit einem Teilbereich seiner freien Endbereiche an den die in den Schenkeln (7 und 14) der Gabel(1) vorgesehenen Ausnehmungen (3) und (17) begrenzenden Wandungen zur Anlage.

Die Seitenteile (4) und (16) des Federelementes (4, 16, 13) nehmen aufgrund ihrer Elastizität ihre ursprüngliche Form wieder ein und kommen an den Schenkeln (7) und (14) der Gabel (1) wieder zur Anlage.
Die Verbindung zwischen dem als Gabel (9) ausgebildeten ersten Bauteil und dem als Kopf ausgebildeten zweiten Bauteil (2) ist jetzt hergestellt.
Da das achsenartige Teil (5) nicht nur in den in den Seitenteilen (4) und (16) des Federelementes (4, 16, 13) vorgesehenen Ausnehmungen (6) und (15) gelagert ist, sondern gleichzeitig an den die Endbereiche der in den Schenkeln (7) und (14) der Gabel (1) vorgesehenen Ausnehmungen (3) und (17) begrenzenden Wandungen anliegt, können mittels dieses Gabelgelenks große Druckkräfte übertragen werden, obwohl die eigentliche Lagerung für das achsenartige Teil (5) von den Seitenteilen (4) und (16) des Federelementes (4, 16, 13) gebildet wird.

Die in den Schenkeln (7) und (14) der Gabel (1) vorgesehenen Ausnehmungen (3) und (17) dienen somit als Zwangsführung für das achsenartige Teil (5) und somit für den Kopf. Die in den Seitenteilen (4) und (16) des Federelementes (4, 16, 13) vorgesehenen Ausnehmungen (6) und (15) dienen als Lagerung für das achsenartige Teil (5) und somit für den Kopf.

Soll die Gabelgelenkverbindung gelöst werden, so werden lediglich die beiden Seitenteile (4) und (16) des Federelementes (4, 16, 13) mittels eines geeigneten Spreizwerkzeugs seitlich von den Schenkeln (7) und (14) der Gabel (1) weggedrückt und das mit dem achsenartigen Teil (5) verbundene zweite Bauteil (2) aus der Gabel (1) herausgezogen.

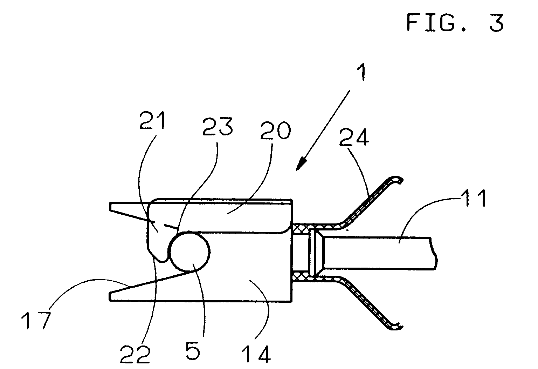

In Figur 3 ist eine im wesentlichen der Gabel nach Figur 1 entsprechende Gabel dargestellt, die um 90° um ihre Längsachse gedreht ist. Die Gabel nach Figur 3 weist lediglich anders ausgebildete Federelemente auf, die mit dem achsenartigen Teil zusammenwirken.
Der besseren Übersicht halber sind die den in den Figuren 1 und 2 gezeigten Bauteilen gleichen Bauteile mit gleichen Bezugsziffern versehen.

Mit der Bezugsziffer (14) ist der eine Schenkel der Gabel dargestellt, der eine in Richtung der Längsachse der Gabel (1) verlaufende keilförmige Ausnehmung (17) aufweist, welche in ihrem im Schenkel (14) gelegenen Endbereich halbkreisförmig ausgebildet ist. Der in dieser Ansicht nicht erkennbare zweite Schenkel der Gabel ist selbstverständlich genauso ausgebildet wie der erste Schenkel (14) der Gabel (1) und weist auch eine Ausnehmung auf, die der Ausnehmung (17) des ersten Schenkels (14) entspricht.
Die Gabel gemäß Figur 3 ist ebenso wie die Gabel gemäß Figur 1 als eine U-förmige einstückige Baueinheit ausgebildet.

An dem Schenkel (14) der Gabel (1) ist ein Federelement (20, 21) mit seinem dem freien Endbereich des Schenkels (14) abgewandten Ende am Schenkel (14) befestigt. Das dem freien Endbereich des Schenkels (14) zugewandte Ende des Federelementes (20, 21) weist einen quer zur Längsachse des Schenkels (14) verlaufenden nasenartigen Vorsprung (21) auf. Der Vorsprung (21) ist, quer zur Längsachse des Schenkels (14) gesehen, so lang bemessen, daß er sich über die gedachte Mittellinie der Ausnehmung (17) ein Stück hinaus erstreckt. Das Federelement (20, 21) mit seinem nasenartigen Vorsprung (21) ist so geformt, daß der Bereich des Überganges vom geradlinigen Teil des Federelementes (20, 21) zum nasenartigen Vorsprung (21) und zum Teil auch der nasenartige Vorsprung (21) auf ihrer dem Boden der Ausnehmung (17) zugewandten Seite abgerundet sind. Der Radius dieser Abrundung entspricht in etwa dem Radius des achsenartigen Teiles (5).

Auf seiner dem Boden der Ausnehmung (17) abgewandten Seite weist der nasenartige Vorsprung (21) des Federelementes (20, 21) eine Anlaufschräge (22) auf. Das am Schenkel (14) der Gabel angeordnete Federelement (20, 21) stellt praktisch eine Klinke dar, die das achsenartige Teil (5) übergreift.

Selbstverständlich ist das Federelement an dem zweiten, hier nicht sichtbaren Schenkel der Gabel genauso ausgebildet wie das im vorstehenden beschriebene Federelement.

An dem die beiden Schenkel der Gabel verbindenden Verbindungsteil ist, wie auch in Figur 1 bereits dargestellt, eine Stange (11) befestigt. Die Stange (11) ist in diesem Ausführungsbeispiel von einem Faltenbalg (24) umgeben.

Beim Einführen des mit einem nicht dargestellten Bauteil verbundenen achsenartigen Teiles in die Ausnehmung (17) wird das klinkenartige Federelement (20, 21) von dem freien Endbereich des achsenartigen Teiles (5) nach außen, vom Schenkel (14) weg gedrückt. Das Gleiche geschieht selbstverständlich auch mit dem am anderen Schenkel befestigten Federelement. Je weiter sich das achsenartige Teil (5) dem Boden der Ausnehmung (17) nähert, desto mehr nähert sich auch wieder das Federelement (20, 21) seinem zugeordneten Schenkel (14). Sobald das achsenartige Teil (5) an der den ebenfalls abgerundeten Endbereich der Ausnehmung (17) begrenzenden Wand zur Anlage kommt, nimmt auch das Federelement (20, 21) seine ursprüngliche Lage wieder ein.

Soll die Gabelgelenkverbindung wieder gelöst werden, so wird das klinkenartige Federelement (20, 21) nach außen vom Schenkel (14) weggedrückt und das das Bauteil mit dem achsenartige Teil (Kopf) aus der Ausnehmung (17) des Schenkels (14) herausgezogen. Gleichzeitig geschieht dies natürlich auch mit dem nicht dargestellten zweiten klinkenartigen Federelement, welches an dem ebenfalls nicht dargestellten zweiten Schenkel der Gabel angeordnet ist.

Die in den Figuren 1, 2 und 3 dargestellte Ausnehmung in jedem der Schenkel braucht selbstverständlich nicht die gezeigte Keilform aufzuweisen, sondern kann auch so ausgebildet sein, daß die die Ausnehmung seitlich begrenzenden Wände im wesentlichen parallel zueinander verlaufen.

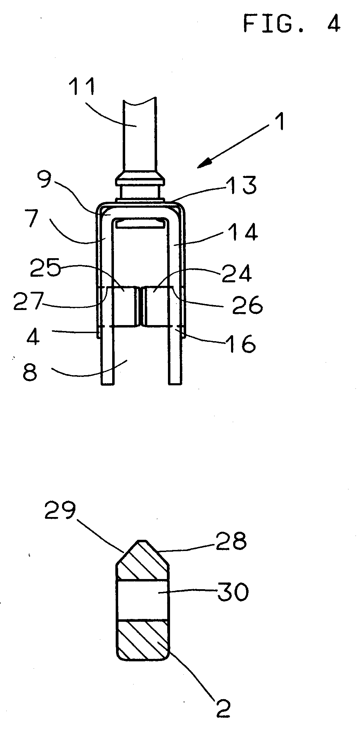

Figur 4 zeigt ein Gabelgelenk, bei welchem die Gabel und das die Gabel übergreifende Federelement der Gabel und dem Federelement des Gabelgelenks gemäß Figur 1 gleich sind. Der besseren Übersicht halber sind die den in Figur 1 gezeigten Bauteilen gleichen Bauteile mit gleichen Bezugsziffern versehen.

Die Gabel (1) weist einen ersten Schenkel (7) und einen zweiten Schenkel (14) auf. Mittels eines Verbindungsteiles (9) sind die beiden Schenkel (7) und (14) an ihrem freien Ende miteinander verbunden. Die beiden Schenkel (7) und (14) verlaufen im wesentlichen parallel zueinander und sind mit Abstand so zueinander angeordnet, daß ihre einander zugewandten Seiten die seitliche Begrenzung für einen Schlitz (8) zur Aufnahme eines als Kopf für das Gabelgelenk ausgebildeten zweiten Bauteiles (2) bilden. In diesem Ausführungsbeispiel sind die beiden Schenkel (7) und (14) und das Verbindungsteil (9) als eine einstückige, U-förmigen Baueinheit (1) ausgebildet.

Auf die U-förmig ausgebildete Gabel (1) ist ein ebenfalls U-förmiges Federelement (4, 16, 13) aufgeschoben, derart, daß die der Stirnseite des Verbindungsteiles (9) für die Schenkel (7, 14) der Gabel (1) zugewandte Seite des U-förmigen Federelementes (4, 16, 13) an dieser Stirnseite anliegt und wenigstens ein Teilbereich der beiden Seitenteile (4) und (16) des U-förmigen Federelementes (4, 16, 13) unter Vorspannung an den einander abgewandten Seiten der Schenkel (7) bzw. (14) der Gabel (1) anliegen (Seitenteil (4) des Federelementes (4, 16, 13) liegt an der Außenseite des Schenkels (7) und Seitenteil (16) des Federelementes (4, 16, 13) liegt an der Außenseite des Schenkels (14) der Gabel (1) an).

In dem Schenkel (7) und in dem Schenkel (14) ist je eine quer zur Längsachse der Gabel (1) verlaufende Durchgangsbohrung (27) bzw. (26) vorgesehen. Die beiden Durchgangsbohrungen (27) und (26) sind gleichachsig zueinander angeordnet. Auf der dem Schenkel (7) zugewandten Seite des Seitenteils (4) des Federelementes (4, 16, 13) ist quer zur Längsachse der Gabel (1) verlaufend ein erster Achsstummel (25) am Seitenteil (4) des Federelementes (4, 16, 13) angeordnet, welcher sich durch die im Schenkel (7) vorgesehene Durchgangsbohrung (27) hindurch in den Schlitz (8) der Gabel (1) hineinerstreckt. Desgleichen ist an der dem Schenkel (14) der Gabel (1) zugewandten Seite des Seitenteiles (16) des Federelementes (4, 16, 13) quer zur Längsachse der Gabel (1) verlaufend ein zweiter Achsstummel (24) am Seitenteil (16) des Federelementes (4, 16, 13) angeordnet, welcher sich durch die im Schenkel (14) der Gabel (1) vorgesehene Durchgangsbohrung (26) hindurch in den Schlitz (8) der Gabel hineinerstreckt. Die beiden Achsstummel (25) und (24) bilden eine Achse (25, 24), um welche das mit der Gabel (1) zu verbindende Bauteil (2) verschwenkbar ist. Das Bauteil (2) ist als Kopf für ein aus einer Gabel, einem Kopf und einer zur Verbindung von Gabel und Kopf dienenden Achse bestehendes Gabelgelenk ausgebildet. Das als Kopf ausgebildete Bauteil (2) weist eine quer zu seiner Längsachse verlaufende Durchgangsbohrung (30) auf, in welche die Achsstummel (25) und (24) des Federelementes (4, 16, 13) der Gabel (1) eingreifen. An seiner der Gabel (1) zugewandten Seite weist das Bauteil (2) zwei schräg aufeinander zu verlaufende Flächen (28) und (29) auf, die als Anlaufschrägen dienen.

An dem Verbindungsteil (9) der Gabel (1) ist ein Bauteil (11) einer nicht beschriebenen Einrichtung befestigt. Das Bauteil (11) dient gleichzeitig zur festen Verbindung des Federelementes (4, 16, 13) mit der Gabel (1).

Es wird angenommen, daß das Bauteil (11) Bestandteil eines Bremsventils ist, welches auf der dem Führerhaus eines Fahrzeugs abgewandten Seite des Bodens des Fahrzeugs am Boden befestigt ist. Auf der dem Führerhaus zugewandten Seite des Bodens des Fahrzeugs ist um eine Achse verschwenkbar eine Trittplatte zur Betätigung des Bremsventils angeordnet. An der Trittplatte ist das als Stößel ausgebildete Bauteil (2) vorgesehen. Das Bauteil (2) ist in seinem freien Endbereich als Kopf für das Gabelgelenk ausgebildet.

Soll die Gabel (1) des Gabelgelenk mit dem als Kopf ausgebildeten Bauteil (2) verbunden werden, so wird das Bauteil (2) durch eine im Boden des Fahrzeugs vorgesehene Durchgangsbohrung hindurch in den Schlitz (8) der Gabel (1) geführt. Beim Einführen des Bauteils (2) in den Schlitz (8) der Gabel (1) werden die beiden Achsstummel (25) und (24) von den schräg aufeinander zu verlaufenden Flächen (29) und (28) des Bauteiles (2) gegen die Kraft des Federelementes (4, 16, 13) nach außen, in Richtung vom Schlitz (8) der Gabel (1) weg gedrückt. Ist das Bauteil (2) so weit in den Schlitz (8) der Gabel (1) eingeschoben worden, daß die Achsstummel (25) und (24) mit der im Bauteil (2) vorgesehenen Durchgangsbohrung (30) zur Deckung kommen, greifen die beiden Achsstummel (25) und (24) in die Durchgangsbohrung (30) des Bauteiles (2) ein. Die Seitenteile (4) und (16) des Federelementes (4, 16, 13) kommen an den Schenkeln (7, 14) der Gabel (1) wieder zur Anlage. Die Verbindung zwischen der Gabel (1) und dem Bauteil (2) ist hergestellt.

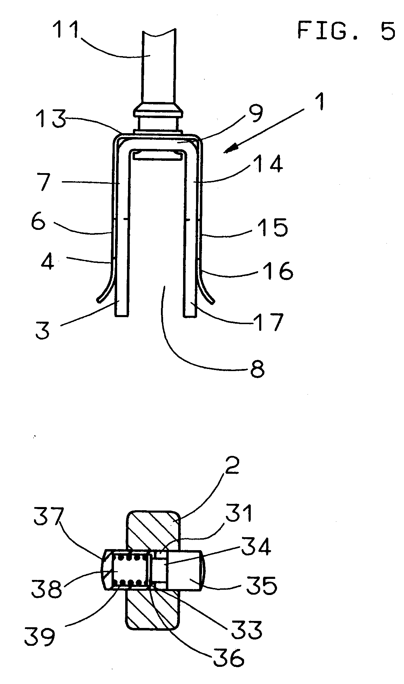

Figur 5 zeigt ein Gabelgelenk, bei welchem am Kopf ein achsartiges Teil vorgesehen ist, welches sich aus zwei Teilstücken zusammensetzt, die gegen eine Federkraft aufeinander zu bzw. voneinander weg bewegbar sind.

Der besseren Übersicht halber sind die den in Figur 1 gezeigten Bauteilen gleichen Bauteile mit gleichen Bezugsziffern versehen.

Die Gabel dieses Gabelgelenks weist einen ersten Schenkel (7) und einen zweiten Schenkel (14) auf. Mittels eines Verbindungsteiles (9) sind die beiden Schenkel (7) und (14) an ihrem freien Ende miteinander verbunden. Die beiden Schenkel (7) und (14) verlaufen im wesentlichen parallel zueinander und sind mit Abstand so zueinander angeordnet, daß ihre einander zugewandten Seiten die seitliche Begrenzung für einen Schlitz (8) zur Aufnahme eines als Kopf für das Gabelgelenk ausgebildeten zweiten Bauteiles (2) bilden.

In diesem Ausführungsbeispiel sind die beiden Schenkel (7) und (14) und das Verbindungsteil (9) als eine einstückige U-förmige Baueinheit (1) ausgebildet.

Sowohl im ersten Schenkel 7 als auch im zweiten Schenkel (14) der Gabel (1) ist je eine vom freien Ende des jeweiligen Schenkels (7) bzw. (14) ausgehende, sich in den Schenkel (7) bzw. (14) hineinerstreckende Ausnehmung (3 bzw. 17) vorgesehen, die in Richtung der Längsachse der Schenkel (7) und (14) verläuft. Der im Schenkel (7) bzw. (14) auslaufende Endbereich jeder der beiden Ausnehmungen (3 bwz. 17) ist halbkreisförmig ausgebildet. Die die halbkreisförmig ausgebildeten Endbereiche der Ausnehmungen (3) und (17) begrenzenden Wandungen dienen als Auflager für ein achsenartiges Teil, welches am zweiten Bauteil (2) befestigt ist.

Das achsenartige Teil setzt sich aus einem ersten Teilstück (37) und einem zweiten Teilstück (35, 34) zusammen. Das erste Teilstück (37) weist auf seiner dem zweiten Teilstück (35, 34) zugewandten Seite eine Ausnehmung (38) auf, in welcher eine Feder (39) angeordnet ist. Das zweite Teilstück (35, 34) ist abgestuft ausgebildet, wobei der dem ersten Teilstück zugewandte Bereich (34) des zweiten Teilstückes (35, 34) einen kleineren Durchmesser aufweist als das erste Teilstück (37). Der den geringeren Durchmesser aufweisende Bereich (34) des zweiten Teilstückes (35, 34) erstreckt sich in die Ausnehmung (38) des ersten Teilstückes (37) hinein. An seinem in der Ausnehmung (38) des ersten Teilstückes (37) gelegenen Ende weist das zweite Teilstück (35, 34) einen sich quer zur Längsachse des ersten Teilstückes (37) und des zweiten Teilstückes (35, 34) verlaufenden, sich nach außen erstreckenden Vorsprung (36) auf. Der dem zweiten Teilstück (35, 34) zugewandte Endbereich des ersten Teilstückes (37) weist einen quer zur Längsachse des ersten Teilstückes (37) verlaufenden, sich nach innen erstreckenden Vorsprung (33) auf, welcher zwischen dem den größeren Querschnitt aufweisenden Bereich (35) des zweiten Teilstückes (35, 34) und dem Vorsprung (36) des zweiten Teilstückes (35, 34) gelegen ist. Von der Feder (39) wird das zweite Teilstück (35, 34) in Richtung vom ersten Teilstück (37) weg belastet, wobei der Vorsprung (36) des zweiten Teilstücks (35, 34) am Vorsprung (33) des ersten Teilstücks (37) anliegt. Das aus dem ersten Teilstück (37) und dem zweiten Teilstück (35, 34) bestehende achsenartige Teil (37, 35, 34, 39) ist in einer im Bauteil (2) vorgesehenen Durchgangsbohrung (31) angeordnet. Das achsenartige Teil (37, 35, 34, 39) ist in seiner axialen Erstreckung so bemessen, daß diese größer ist als der Abstand zwischen den beiden Seitenteilen (4) und (16) des Federelementes (4, 16, 13).

Auf die U-förmig ausgebildete Gabel (1) ist ein ebenfalls U-förmiges Federelement (4, 16, 13) aufgeschoben, derart, daß die der Stirnseite des Verbindungsteiles (9) für die Schenkel (7, 14) der Gabel (1) zugewandte Seite des U-förmigen Federelementes (4, 16, 13) an dieser Stirnseite anliegt und wenigstens ein Teilbereich der beiden Seitenteile (4) und (16) des U-förmigen Federelementes (4, 16, 13) unter Vorspannung an den einander abgewandten Seiten der Schenkel (7) und (14) der Gabel (1) (19 anliegen (Seitenteil (4) des Federelementes (4, 16, 13) liegt an der Außenseite des Schenkels (7) und Seitenteil (16) des Federelementes (4, 16, 13) liegt an der Außenseite des Schenkels (14) der Gabel (1) an).

Jedes der beiden Seitenteile (4) bzw. (16) des Federelementes (4, 16, 13) weist eine quer zur Längsachse des Federelementes (4, 16, 13) verlaufende Ausnehmung (6) bzw. (15), wie z. B. eine Durchgangsbohrung, auf, wobei die Ausnehmungen (6) und (15) so zueinander angeordnet sind, daß sie miteinander fluchten.

An ihrem freien Endbereich sind die Seitenteile (4) und (16) des Federelementes (4, 16, 13) leicht nach außen gebogen ausgebildet.

Das die beiden Schenkel (7) und (14) der Gabel (1) verbindende Verbindungsteil (9) weist eine in Richtung der Längsachse der Gabel (1) verlaufende Bohrung auf, die mit einer Bohrung fluchtet, welche in dem am Verbindungsteil (9) anliegenden Teil (13) des Federelementes (4, 16, 13) vorgesehen ist. In die Bohrungen ist ein Bauteil (11) mit seinem einen Endbereich eingeführt und mit der Gabel (1) verbunden, wodurch das Federelement (4, 16, 13) zwischen dem Verbindungsteil (9) der beiden Schenkel (7) und (14) der Gabel (1) und einem Vorsprung des Bauteils (11) fixiert ist.

Bei der Montage wird das Bauteil (2) in den Schlitz (8) der Gabel eingeschoben. Sobald die beiden Teilstücke (37) und (35, 34) des achsenartigen Teiles (37, 35, 34, 39) Kontakt mit den Seitenteilen (4) und (16) des Federelementes (4, 16, 13) haben, werden aufgrund der gegenüber der Kraft der Seitenteile (4, 16) des Federelementes (4, 16, 13) geringeren Kraft der Feder (39) die Teilstücke (37) und (35, 34) gegen die Kraft der Feder (39) aufeinander zu bewegt. Ist das Bauteil (2) so weit in den Schlitz (8) der Gabel (1) eingeschoben, daß das achsenartige Teil (37, 35, 34, 39) mit den Durchgangsbohrungen (6) und (15) in den Seitenteilen (4) und (16) des Federelementes (4, 16, 13) fluchtet, werden die beiden Teilstücke (37) und (35, 34) des achsenartigen Teiles (37, 35, 34, 39) durch die Kraft der Feder (39) voneinander weg bewegt und treten so in die Durchgangsbohrungen (6) und (15) der Seitenteile (4) und (16) des Federelementes (4, 16, 13) ein. Die Verbindung zwischen der Gabel (1) und dem Bauteil (2) ist hergestellt.

Da das achsenartige Teil (37, 35, 34, 39) nicht nur in den in den Seitenteilen (4) und (16) des Federelementes (4, 16, 13) vorgesehenen Ausnehmungen (6) und (15) gelagert ist sondern gleichzeitig an den die Endbereiche der in den Schenkeln (7) und (14) der Gabel (1) vorgesehenen Ausnehmungen (3) und (17) begrenzenden Wandungen anliegt, können mittels dieses Gabelgelenks große Druckkräfte übertragen werden, obwohl die eigentliche Lagerung für das achsenartige Teil (37, 35, 34, 39) von den Seitenteilen (4) und (16) des Federelementes (4, 16, 13) gebildet wird.

Auf das Federelement (4, 16, 13) kann verzichtet werden, wenn die Schenkel (7) und (14) der Gabel (1) auf ihren einander zugewandten Seiten eine Anlaufschräge zum Einführen des achsenartigen Teiles (37, 35, 34, 39) aufweisen und anstelle der Ausnehmungen (3, 17) in den Schenkeln (7, 14) der Gabel (1) in den Schenkeln (7, 14) je eine Durchgangsbohrung zur Aufnahme der Endbereiche des achsenartigen Teiles (37, 35, 34, 39) vorgesehen ist.

Die im vorstehenden beschriebenen Gabelgelenke bestehen aus einer Gabel, einem Kopf und einem die Gabel mit dem Kopf verbindenden achsenartigen Teil. Wie in den Figuren 1 und 3 dargestellt, kann das achsenartige Teil (5) aus einem Bolzen bestehen, der z. B. in einer das als Kopf ausgebildete Bauteil (2) durchdringenden Bohrung befestigt ist. Ebenso ist es auch möglich, wie in Figur 5 dargestellt, das achsenartige Teil geteilt auszubilden, wobei das eine Teilstück (37) eine Ausnehmung (38) aufweist, in welche sich ein Teilbereich des anderen Teilstückes (35, 34) des achsenartigen Teiles (37, 35, 34) hineinerstreckt. Zwischen den beiden Teilstücken (37, 35, 34) ist eine Feder (39) angeordnet, gegen deren Kraft sich die beiden Teilstücke (37, 35, 34) nach Art eines Teleskops aufeinander zu bewegen lassen. Das achsenartige Teil (37, 35, 34) ist in einer Durchgangsbohrung des als Kopf für das Gabelgelenk ausgebildeten Bauteiles (2) gelagert. In diesen Fällen besteht das Gabelgelenk aus der Gabel, dem Kopf und dem die Gabel mit dem Kopf gelenkig verbindenden achsenartigen Teil.

Es ist aber auch möglich, als achsenartiges Teil am Kopf wenigstens einen quer zur Längsachse des Kopfes verlaufenden, sich nach außen erstreckenden Vorsprung vorzusehen, so daß der Kopf und das achsenartige Teil eine einstückige Baueinheit bilden. In diesem Fall besteht das Gabelgelenk aus zwei Teilen, nämlich der Gabel und dem Kopf, an dem das achsenartige Teil in Form eines Vorsprungs angeformt ist. Des weiteren ist es möglich, an einem Schenkel oder auch an beiden Schenkeln der Gabel einen Achsstummel vorzusehen, der in eine Bohrung des Kopfes eingreift. Dies ist jedoch nur dann möglich, wenn die Gabel oder wenigstens die Schenkel der Gabel aus einem elastisch verformbaren Material besteht bzw. bestehen. Ist die Gabel aus einem starren Material gefertigt, und ist an wenigstens einem Schenkel der Gabel ein z. B. als Blattfeder ausgebildetes Federelement vorgesehen, so kann auf der dem Schenkel zugewandten Seite des Federelementes ein Achsstummel angeordnet werden, der in eine Bohrung des Kopfes eingreift.

Die Erfindung ist nicht an die beschriebenen Ausführungsbeispiele gebunden, es sind die verschiedensten Ausführungen von Gabelkopf und achsenartigem Teil möglich.

Die Gabel kann aus einem elastisch verformbaren Material bestehen. Das achsenartige Teil kann am Kopf oder wenigstens einem Schenkel der Gabel angeordnet sein. Die Lagerstelle für das achsenartige Teil kann an wenigstens einem der Schenkel der Gabel oder an wenigstens einer Seite des Kopfes vorgesehen werden.

Die Zwangsführung für den Kopf bzw. für das achsenartige Teil kann, wie in den Ausführungsbeispielen dargestellt, keilförmig ausgebildet sein, sie kann jedoch auch so ausgebildet sein, daß ihre Führungsflächen parallel zueinander verlaufen.

Anstelle das Federelement U-förmig auszubilden und auf die Gabel aufzuschieben, können an den einander abgewandten Seiten der Schenkel der Gabel Blattfedern befestigt werden, wobei jede der beiden Blattfedern eine Durchgangsbohrung aufweist, die als Lagerstelle für das achsenartige Teil dient. Es ist auch möglich, auf der dem zugeordneten Schenkel zugewandten Seite jedes Federelements ein achsenartiges Teil vorzusehen, welches quer zur Längsachse der Gabel verläuft und sich durch eine im Schenkel der Gabel vorgesehene Durchgangsbohrung in den Schlitz zwischen den beiden Schenkeln hineinerstreckt und in eine Ausnehmung des Kopfes eingreift.

Von Bedeutung für die Erfindung ist es, daß an wenigstens einem Schenkel der Gabel oder an einem dieser Gabel zugeordneten Federelement eine Ausnehmung und an der diesem Schenkel oder diesem Federelement zugeordneten Seite des Kopfes ein achsenartiges Teil vorgesehen ist, welches in die Ausnehmung eingreift, oder daß an dem Schenkel bzw. dem Federelement ein achsenartiges Teil und an der diesem zugewandten Seite des Kopfes eine Ausnehmung vorgesehen ist und daß wenigstens ein Schenkel der Gabel elastisch verformbar ausgebildet ist oder das achsenartige Teil federnd am Kopf oder am Schenkel gelagert ist, so daß die Gabel und der Kopf nach Art einer Schnappverbindung miteinander verbindbar sind. Des weiteren ist es für die Erfindung von Bedeutung, daß die Gabel und/oder der Kopf Führungsflächen oder Führungsteile mit Führungsflächen zur direkten oder indirekten zwangsweisen Führung der miteinander zu verbindenden Teile aufweist bzw. aufweisen.

## Patentansprüche

1. Gabelgelenk mit einer zwei Schenkel (7, 14) aufweisenden Gabel (7, 14, 9) und einem zwischen den beiden Schenkeln (7 14) angeordneten verschwenkbaren Kopf (2), dadurch gekennzeichnet, daß die Gabel (7, 14, 9) und der Kopf (2) nach Art einer Schnappverbindung miteinander verbindbar sind.

2. Gabelgelenk mit einer zwei Schenkel (7, 14) aufweisenden Gabel (7, 14, 9) und einem zwischen den beiden Schenkeln (7, 14) angeordneten verschwenkbaren Kopf (2), dadurch gekennzeichnet, daß die Gabel (7, 14, 9) und/oder der Kopf (2) Führungsflächen oder Führungsteile mit Führungsflächen zur direkten oder indirekten zwangsweisen Führung der miteinander zu verbindenden Teile aufweist bzw. aufweisen.

3. Gabelgelenk mit einer zwei Schenkel (7, 14) aufweisenden Gabel (7, 14, 9) und einem zwischen den beiden Schenkeln (7, 14) angeordneten verschwenkbaren Kopf (2) gekennzeichnet durch die folgende Merkmale:
a) Die Gabel (7, 14, 9) und der Kopf (2) sind nach Art einer Schnappverbindung miteinander verbindbar;
b) Die Gabel (7, 14, 9) und/oder der Kopf (2) weisen Führungsflächen oder Führungsteile mit Führungsflächen zur direkten oder indirekten zwangsweisen Führung der miteinander zu verbindenden Teile auf.

4. Gabelgelenk nach wenigstens einem der vorhergehenden Ansprüche, dadurch gekennzeichnet, daß zur Lagerung des verschwenkbaren Kopfes (2) wenigstens ein achsenartiges Teil (5, 25, 24, 37, 35, 34) vorgesehen ist.

5. Gabelgelenk nach wenigstens einem der vorhergehenden Ansprüche, dadurch gekennzeichnet, daß die Gabel (7, 14, 9) aus einem elastisch verformbaren Material besteht.

6. Gabelgelenk nach wenigstens einem der vorhergehenden Ansprüche, gekennzeichnet durch die folgenden Merkmale:
a) das achsenartige Teil (5) ist am Kopf (2) angeordnet;
b) wenigstens ein Schenkel (7, 14) weist eine Lagerstelle (6, 15) für das achsenartige Teil (5) auf;
c) wenigstens ein Schenkel (7, 14) oder der Kopf (2) ist auf wenigstens einem Teilbereich seiner axialen Erstreckung elastisch verformbar ausgebildet.

7. Gabelgelenk nach wenigstens einem der vorhergehende Ansprüchen, dadurch gekennzeichnet, daß der elastisch verformbare Teilbereich des Schenkels (7, 14) aus einem Federelement (14, 16, 13) besteht.

8. Gabelgelenk nach wenigstens einem der vorhergehenden Ansprüche, dadurch gekennzeichnet, daß das achsenartige Teil (5) am Kopf (2) und die Lagerstelle (6, 15) zur Aufnahme des achsenartigen Teiles (5) am Federelement (4, 16, 13) angeordnet ist.

9. Gabelgelenk nach wenigstens einem der vorhergehenden Ansprüche, dadurch gekennzeichnet, daß das achsenartige Teil (25, 24) am Federelement (4, 16, 13) und die Lagerstelle zur Aufnahme des achsenartigen Teiles (25, 24) am Kopf (2) angeordnet ist.

10. Gabelgelenk nach wenigstens einem der vorhergehenden Ansprüche, dadurch gekennzeichnet, daß das achsenartige Teil sich aus zwei Teilstücken (35, 34 und 37) zusammensetzt, welche sich gegen eine Federkraft aufeinander zu bzw. voneinander weg bewegen lassen.

11. Gabelgelenk nach wenigstens einem der vorhergehenden Ansprüche, dadurch gekennzeichnet, daß das achsenartige Teil (35, 34, 37) in einer Bohrung (31) des Kopfes (2) angeordnet ist.

12. Gabelgelenk nach wenigstens einem der vorhergehenden Ansprüche, dadurch gekennzeichnet, daß an jeder dem jeweiligem Schenkel (7, 14) zugewandten Seite des Kopfes (2) je achsenartiges Teil (5) angeordnet ist.

13. Gabelgelenk nach wenigstens einem der vorhergehenden Ansprüche, dadurch gekennzeichnet, daß in wenigstens einem der beiden Schenkel (7, 14) der Gabel (7, 14, 9) eine Bohrung (26, 27) zur Aufnahme des achsenartigen Teiles (5 bzw. 35, 34, 37) angeordnet ist.

14. Gabelgelenk nach wenigstens einem der vorhergehenden Ansprüche, dadurch gekennzeichnet, daß an den einander abgewandten Seiten der Schenkel (7, 14) der Gabel (7, 14, 9) je ein Federelement angeordnet ist, wobei jedes der beiden Federelemente an dem dem freien Ende des zugeordneten Schenkels (7, 14) der Gabel (7, 14, 9) abgewandten Bereich des Schenkels (7, 14) befestigt ist und über den überwiegenden Teil der axialen Erstreckung des Schenkels (7, 14) unter Vorspannung an dem Schenkel (7, 14) anliegt.

15. Gabelgelenk nach wenigstens einem der vorhergehenden Ansprüche, dadurch gekennzeichnet, daß an wenigstens einem der beiden Federelemente (4, 16) eine Lagerstelle zur Aufnahme des achsenartigen Teiles (5 bzw. 35, 34, 37) vorgesehen ist.

16. Gabelgelenk nach wenigstens einem der vorhergehenden Ansprüche, dadurch gekennzeichnet, daß an wenigstens einem der Federelemente (4, 16) ein achsenartiges Teil (5 bzw. 35, 34, 37) vorgesehen ist.

17. Gabelgelenk nach wenigstens einem der vorhergehenden Ansprüche, dadurch gekennzeichnet, daß das Federelement an seinem freien Endbereich nach Art einer Klinke (20, 21) ausgebildet ist, welches das achsenartige Teil (5) übergreift.

18. Gabelgelenk nach wenigsten einem der vorhergehenden Ansprüche, dadurch gekennzeichnet, daß das klinkenartig Teil (20, 21) auf seiner dem freien Endbereich des Schenkel (7, 14) zugewandten Seite eine Anlaufschräge (22) aufweist.

19. Gabelgelenk nach wenigstens einem der vorhergehenden Ansprüche, dadurch gekennzeichnet, daß die Mittel zur zwangsweisen Führung des Kopfes (2) aus einer in wenigstens einem der beiden Schenkel (7, 14) der Gabel (7, 14, 9) angeordneten Ausnehmung (3, 17) besteht, die vom freien Ende des Schenkels (7, 14) ausgehend in Richtung der Längsachse des Schenkels (7, 14) verläuft.

20. Gabelgelenk nach wenigstens einem der vorhergehenden Ansprüche, dadurch gekennzeichnet, daß der im Schenkel (7, 14) auslaufende Endbereich der als Ausnehmung (3, 17) ausgebildeten Zwangsführung für den Kopf (2) halbkreisförmig ausgebildet ist, wobei der Radius des Halbkreises annähernd dem Radius des achsenartigen Teiles (5) entspricht.

21. Gabelgelenk nach wenigstens einem der vorhergehenden Ansprüche, dadurch gekennzeichnet, daß die Ausnehmung (3, 17) im wesentlichen keilförmig ausgebildet ist, wobei sie sich vom freien Schenkel (7, 14) der Gabel (7, 14, 9) in den Schenkel (7, 14) hinein verjüngt.

22. Gabelgelenk nach wenigstens einem der vorhergehenden Ansprüche, dadurch gekennzeichnet, daß der in dem Schenkel (7, 14) auslaufende Endbereich der Ausnehmung für das achsenartige Teil (5) als Anlagefläche für das achsenartige Teil (5) dient.

23. Gabelgelenk nach wenigstens einem der vorhergehenden Ansprüche, dadurch gekennzeichnet, daß das achsenartige Teil als ein am Kopf angeordneter Vorsprung ausgebildet ist.

24. Gabelgelenk nach wenigstens einem der vorhergehenden Ansprüche, dadurch gekennzeichnet, daß das achsenartige Teil als ein an dem Federelement (4, 16) angeordneter Vorsprung (24, 25) ausgebildet ist.
